(19) Europäisches Patentamt
European Patent Office
Office européen des brevets

(11) Veröffentlichungsnummer: **0 678 537 A1**

# (12) EUROPÄISCHE PATENTANMELDUNG

(21) Anmeldenummer: **95105704.1**

(22) Anmeldetag: **15.04.95**

(51) Int. Cl.[6]: **C08G 18/75**, C09D 175/04, C09J 175/04

(30) Priorität: **22.04.94 DE 4414032**

(43) Veröffentlichungstag der Anmeldung:
**25.10.95 Patentblatt 95/43**

(84) Benannte Vertragsstaaten:
**BE DE ES FR GB IT NL**

(71) Anmelder: **BASF AKTIENGESELLSCHAFT**
**D-67056 Ludwigshafen (DE)**

(72) Erfinder: **Häberle, Karl, Dr.**
**Allerheiligenstrasse 15**
**D-67346 Speyer (DE)**

## (54) Als Beschichtungsmittel geeignete Polyurethane.

(57) Als Beschichtungsmittel oder Komponenten hierfür geeignete Polyurethane, aufgebaut im wesentlichen aus

A)

$a_1$) 40 bis 100 mol-% Bis(4-isocyanatocyclohexyl)methan, wobei der trans/trans-Anteil von ($a_1$) bis zu 18 mol-%, bezogen auf die Menge von ($a_1$), beträgt

und

$a_2$) 0 bis 60 mol-% weiterer mehrwertiger aliphatischer, cycloaliphatischer, araliphatischer oder aromatischer Isocyanate mit 4 bis 30 C-Atomen

und

B)

$b_1$) 20 bis 100 mol-% eines nicht-aromatischen Diols und

$b_2$) 0 bis 80 mol-% weiterer mehrwertiger Verbindungen mit reaktiven Gruppen, die mit den Isocyanatgruppen von A) reagieren können, wobei die reaktiven Gruppen Hydroxylgruppen oder primäre oder sekundäre Aminogruppen sind.

EP 0 678 537 A1

Die vorliegende Erfindung betrifft neue als Beschichtungsmittel oder Komponenten hierfür geeignete Polyurethane, aufgebaut im wesentlichen aus

A)

$a_1$) 40 bis 100 mol-% Bis(4-isocyanatocyclohexyl)methan, wobei der trans/trans-Anteil von ($a_1$) bis zu 18 mol-%, bezogen auf die Menge von ($a_1$), beträgt und

$a_2$) 0 bis 60 mol-% weiterer mehrwertiger aliphatischer, cycloaliphatischer, araliphatischer oder aromatischer Isocyanate mit 4 bis 30 C-Atomen

und

B)

$b_1$) 20 bis 100 mol-% eines nicht-aromatischen Diols und

$b_2$) 0 bis 80 mol-% weiterer mehrwertiger Verbindungen mit reaktiven Gruppen, die mit den Isocyanatgruppen von (A) reagieren können, wobei die reaktiven Gruppen Hydroxylgruppen oder primäre oder sekundäre Aminogruppen sind.

Weiterhin betrifft die Erfindung wässerige Dispersionen oder nichtwässerige Lösungen, die die Polyurethane enthalten, die Verwendung dieser Dispersionen bzw. Lösungen als Beschichtungsmittel sowie mit Überzügen versehene Gegenstände, die unter Verwendung dieser Dispersionen bzw. Lösungen erhältlich sind.

Polyurethane, die zur Herstellung von Beschichtungsmaterialien, z.B. Lacken, Textil- und Lederbeschichtungen sowie Glasfaserschlichten geeignet sind, sind allgemein bekannt. Besonders vorteilhaft werden für derartige Anwendungszwecke Beschichtungsmittel wie wässerige Dispersionen oder nichtwässerige Lösungen eingesetzt, die Polyurethane, die auf nicht-aromatischen Isocyanaten basieren, enthalten, da solche Polyurethane gegen lichtinduzierten Abbau besonders stabil sind. Für diese Zwecke besonders gut geeignete Polyurethane sind solche auf Basis des handelsüblichen Bis(4-isocyanatocyclohexyl)methans (Ullmanns Encyclopädie der technischen Chemie, 4. Auflage, Band 19, S. 301 bis 341). Hierbei handelt es sich um technische Gemische, die in der Regel

- 20 bis 25 Gew.-% des trans,trans-Isomeren

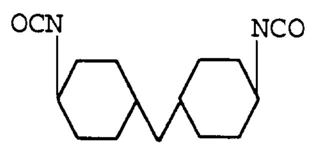

- 45 bis 60 Gew.-% des cis,trans-Isomeren

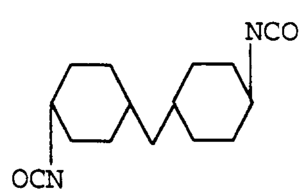

- 10 bis 30 Gew.-% des cis,cis-Isomeren

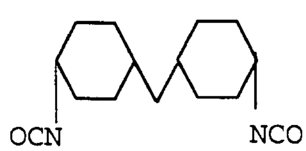

- und 5 bis 10 Gew.-% diverse andere Isomere des Bis(isocyanatocyclohexyl)methansenthalten.

Beschichtungsmittel auf Basis von Polyurethanen, deren Isocyanatkomponente zu mehr als 40 mol-% aus Bis(4-isocyanatocyclohexyl)methan besteht, haben gute anwendungstechnische Eigenschaften. Mit ihnen hergestellte Beschichtungen sind beispielsweise sehr beständig gegenüber vielen Chemikalien und Lösungsmitteln und auch mechanisch hoch beanspruchbar, z.B. gegen Abrieb.

Aus "Polyurethane Elastomers Based on Aliphatic Diisocyanates", S. D. Seneker, J. W. Rosthauser und P. H. Markusch, Konferenzreport der 34th Annual Polyurethane Technical Marketing Conference, October 21-24, 1992, S. 588 bis 597 ist es bekannt, daß die Härte, der Elastizitätsmodul, die Dehnbarkeit und die Kerbschlagzähigkeit von Polyurethanen aus dem Isocyanat ($a_1$) und Polytetrahydrofuran des Molgewichtes 2000 mit steigenden Anteilen des trans/trans-Isomeren von ($a_1$) im Bereich von 20 bis 100 mol-%, bezogen auf den Anteil der Isocyanatkomponente, zunehmen.

In der EP-A 0 507 173 sind wässerige Dispersionen beschrieben, die Polyurethane enthalten, welche zur Verbesserung der Wasserdispergierbarkeit hydrophile Gruppen tragen und aus 20 bis 100 % trans,trans-Bis(4-isocyanatocyclohexyl)methan, bezogen auf den Anteil des Bis(4-isocyanatocyclohexvl)-methans, aufgebaut sind. Auch hier erhöhen sich mit zunehmendem Gehalt an trans,transBis(4-isocyanatocyclohexyl)methan Steifigkeit und Härte.

Weiterhin ist aus der DE-A 42 31 034 bekannt, daß Textilien und Leder, die mit Polyurethanen beschichtet sind, die zu mehr als 30 mol-% aus dem trans/trans-Isomeren von ($a_1$) als Isocyanat-Komponente aufgebaut sind, gute Gebrauchseigenschaften aufweisen und z.B. beim Bügeln nicht kleben.

Nachteilig ist jedoch, daß Filme aus diesen Beschichtungsmitteln eine für manche Anwendungen zu geringe Transparenz aufweisen. Zudem sind hochkonzentrierte Lösungen dieser Polyurethane hochviskos. In vielen Fällen führt die hohe Viskosität bei der Verarbeitung zu technischen Schwierigkeiten, so daß zur Verdünnung relativ große Mengen an Lösungsmitteln erforderlich sind. Dies ist z.B. häufig beim Auftragen von Polyurethan-Lacken auf Lösungsmittelbasis oder bei der Dispergierung von Polyurethanen in Wasser der Fall. Außerdem ist die Stabilität der Dispersionen noch verbesserungsbedürftig, denn sie neigen bei längerer Lagerung zur Koagulatbildung.

Die Aufgabe der vorliegenden Erfindung lag daher in der Bereitstellung von Polyurethanen, die sich zur Herstellung von Beschichtungsmaterialien eignen, die die genannten Mängel nicht aufweisen.

Demgemäß wurden die eingangs definierten Polyurethane, Verfahren zu deren Herstellung sowie deren Verwendung als Beschichtungsmit-tel bzw. Klebstoffe gefunden.

Die erfindungsgemäßen Polyurethane sind als Monomere (A) aus Isocyanaten aufgebaut, wobei

- der Anteil des Bis(4-isocyanatocyclohexyl)methans ($a_1$) mindestens 40, bevorzugt mindestens 50 und besonders bevorzugt mindestens 60 mol-% beträgt und
- das Bis(4-isocyanatocycloxyl)methan ($a_1$) weniger als 18, bevorzugt weniger als 15, besonders bevorzugt weniger als 12 mol-% des trans,trans-Isomeren enthält.

Bevorzugt werden solche Mischungen von Stereoisomeren eingesetzt, bei denen das Verhältnis des cis,cis-Isomeren zum cis,trans-Isomeren 0,2 : 1 bis 3 : 1 und besonders bevorzugt 0,3 : 1 bis 1 : 1 beträgt.

Verfahren zur Trennung der Isomeren sind bekannt und dienten bisher dazu, reines trans,trans-Bis(4-isocyanatocyclohexyl)methan oder Mischungen von Bis(4-isocyanatocyclohexyl)methan mit möglichst hohem Anteil von trans,trans-Bis(4-isocyanatocyclohexyl)methan zu isolieren, um daraus die entsprechenden Polyurethane herzustellen.

Die gewünschten Mischungen der Isomeren können in einfacher Weise ausgehend von handelsüblichem und großtechnisch herstellbarem Bis(4-isocyanatocyclohexyl)methan erhalten werden. Verfahren hierzu sind in der US-A 4 983 763, US-A 1 127 338 und der EP-A 0 453 941 beschrieben.

Man geht beispielsweise so vor, daß man das trans,trans-Isomere aus dem Isomerengemisch mit einem Anteil von mehr als 20 Gew.-% bei Temperaturen von - 20 bis 20 °C auskristallisiert und abtrennt. Das so erhaltene flüssige Isomerengemisch enthält lediglich noch ca. 15 bis 18 mol-% des trans,trans-Isomeren.

Für eine weitere Auftrennung des bei -20 bis 20 °C flüssigen Anteils des Isomerengemisches eigenen sich Verfahren wie die fraktionierte Destillation, nach der man die jeweiligen Isomeren in weitgehend reiner Form erhalten kann.

Daneben besteht die Möglichkeit, die Trennung in die entsprechenden Isomeren auf der Stufe der Ausgangsverbindungen für das Bis(4-isocyanatocyclohexyl)methan, also des Bis(4-aminocycloheryl)-methans, aus dem man das Bis(4-isocyanatocyclohexyl)methan durch Phosgenierung technisch herstellt, vorzunehmen. Auch hier hat sich die Methode der fraktionierten Kristallisation der Stereoisomeren besonders bewährt. Geeignete Verfahren sind z.B. in den US-A 2 494 563, 3 384 661, 3 153 088 und 3 393 236 beschrieben.

Neben dem Bis(4-isocyanatocyclohexyl)methan ($a_1$) kann das Polyurethan im wesentlichen aus bis zu 60 mol-%, bevorzugt aus bis zu 50 mol-%, bezogen auf die Gesamtmenge der Isocyanat-Komponente (A), weiteren mehrwertigen aliphatischen, cycloaliphatischen, araliphatischen und/oder aromatischen Isocyanaten ($a_2$) mit 4 bis 30 C-Atomen aufgebaut sein.

Insbesondere zu nennen sind Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4-Diisocyanato-diphenylmethan, m-Tetramethylxylylendiisocyanat, p-Xylylendiisocyanat sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere Mischungen etwa aus 20 mol-% 2,4-Diisocyanatotoluol und 80 mol-% 2,6-Diisocyanatotoluol. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu den aromatischen Isocyanaten 0,2 : 1 bis 4 : 1 beträgt.

Als Verbindungen (A) kann man auch Isocyanate einsetzen, die neben den freien Isocyanatgruppen weitere verkappte Isocyanatgruppen, z.B. Uretdion- oder Urethangruppen, tragen.

Um Polyurethane mit einem gewissen Verzweigungs- oder Vernetzungsgrad herzustellen, können z.B. dreiwertige und vierwertige Isocyanate eingesetzt werden. Derartige Isocyanate werden z.B. erhalten, indem man zweiwertige Isocyanate miteinander umsetzt, indem man einen Teil ihrer Isocyanatgruppen zu Biuret-, Allophanat- oder Isocyanurat-Gruppen derivatisiert.

Ferner können zum Kettenabbruch auch einwertige Isocyanate mitverwendet werden. Vorzugsweise beträgt ihr Anteil maximal 10 mol-%, bezogen auf die gesamte Menge der Monomeren (A). Die Monoisocyanate tragen vorzugsweise weitere funktionelle Gruppen wie hydrophile Gruppen, olefinische Gruppen oder Carbonylgruppen und dienen zur Einführung von funktionellen Gruppen in das Polyurethan, welche die Dispergierung, die Vernetzung oder polymeranaloge Umsetzungen des Polyurethans ermöglichen. In Betracht kommen hierfür olefinisch ungesättigte Monoisocyanate, die radikalisch polymerisierbar sind, wie die Isomeren des Isopropenyl-$\alpha,\alpha$-dimethylbenzylisocyanates.

Bei den Monomeren (B) unterscheidet man

$b_1$) nicht-aromatische Diole, deren Anteil an den Monomeren (B) 20 bis 100, bevorzugt 30 bis 100, besonders bevorzugt 40 bis 100 mol-% beträgt und

$b_2$) weitere mehrwertige Verbindungen mit reaktiven Gruppen, die mit den Isocyanatgruppen von (A) reagieren können, wobei die reaktiven Gruppen Hydroxylgruppen oder primäre oder sekundäre Aminogruppen sind. Der Anteil von ($b_2$) an den Monomeren (B) beträgt 0 bis 80, bevorzugt 0 bis 70, besonders bevorzugt 0 bis 60 mol-%.

Im Hinblick auf gute Filmbildung und Elastizität kommen als Monomere ($b_1$) vornehmlich höhermolekulare Diole ($b_{1.1}$) in Betracht, die ein Molekulargewicht von etwa 500 bis 5000, vorzugsweise von etwa 1000 bis 3000 g/mol haben.

Bei den Monomeren ($b_{1.1}$)handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren.

Als mehrwertige Alkohole kommen z.B. Ethylenglykol, Propan-1,2-diol, Propan-1,3-diol, Butan-1,4-diol, Butan-1,3-diol, Buten-1,4-diol, Butin-1,4-diol, Pentan-1,5-diol, Hexan-1,6-diol, Octan-1,8-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolmerisate von Lactonen, bevorzugt um endständige Hydroxylgruppen aufweisende Anlagerungsprodukte von Lactonen

an geeignete difunktionelle Startermoleküle handelt. Als Lactone kommen z.B. epsilon-Caprolacton, $\beta$-Propiolacton, gamma-Butyrolacton und/oder Methyl-epsilon-caprolacton sowie deren Gemische in Betracht. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äguivalenten Polykondensate der den Lactonen entsprechenden Hydroxycarbonsäuren, eingesetzt werden.

Daneben kommen als Monomere ($b_{1.1}$) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich.

Die Polyesterdiole und Polyesterdiole können auch als Gemische im Verhältnis 0,1 : 1 bis 9 : 1 eingesetzt werden.

Die Härte und der Elastizitätsmodul der Polyurethane läßt sich erhöhen, wenn als Monomere ($b_1$) neben den Monomeren ($b_{1.1}$) noch niedermolekulare Diole ($b_{1.2}$) mit einem Molekulargewicht von etwa 50 bis 500, vorzugsweise von 60 bis 200 g/mol, eingesetzt werden.

Als Monomere ($b_{1.2}$) werden vor allem die Aufbaukomponenten der für die Herstellung von Polyesterpolyolen genannten kurzkettigen Diole eingesetzt, wobei die unverzweigten Diole mit 2 bis 12 C-Atomen und einer gradzahligen Anzahl von C-Atomen bevorzugt werden.

Bevorzugt werden beim Aufbau der Polyurethane nur Monomere ($b_{1.1}$) und ($b_{1.2}$) als Monomere ($b_1$) eingesetzt, wobei der Anteil der Monomere ($b_{1.1}$) 15 bis 100, bevorzugt 50 bis 65 mol.-%, bezogen auf die Gesamtmenge der Monomere ($b_{1.1}$) und ($b_{1.2}$) beträgt.

Zu den Monomeren ($b_2$) zählen beispielsweise Alkohole mit einer höheren Wertigkeit als 2, die zur Einstellung eines gewissen Verzweigungs- oder Vernetzungsgrades dienen können, z.B. Trimethylolpropan, Glycerin oder Zucker.

Ferner können zum Kettenabbruch in untergeordneten Mengen, d.h. bevorzugt in Mengen von weniger als 10 mol-%, bezogen auf die Monomere ($b_1$) und ($b_2$), Monoalkohole eingesetzt werden. Ihre Funktion ist im allgemeinen ähnlich wie die der Monoisocyanate, Beispiele sind Ester von Acryl- oder Methacrylsäure wie Hydroxyethylacrylat oder Hydroxyethylmethacrylat. Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Zu den Monomeren ($b_2$) zählen ebenfalls Verbindungen mit einer oder mehreren gegnüber Isocyanaten reaktiven Aminogruppen. Da Amine in der Regel schneller als Alkohole oder Wasser mit Isocyanaten reagieren, werden die Amine vor allem dann eingesetzt, wenn die Kettenverlängerung bzw. Vernetzung in Gegenwart von Wasser stattfinden soll. Das ist häufig dann erforderlich ist, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sich im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A-4 269 748) oder Aminsalze (s. USA 4 292 226) eingesetzt werden. Auch Oxazolidine, wie sie beispielsweise in der US-A-4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Ist es beabsichtigt, wässerige Dispersionen der erfindungsgemäßen Polyurethane herzustellen, tragen die Polyurethane einem allgemein bekannten Prinzip zufolge hydrophile Gruppen in solchen Mengen, welche ihre Selbstdispergierbarkeit bewirken. Unter selbstdispergierbaren Polyurethanen versteht man solche, die sich ohne Einwirkung starker Scherkräfte und ohne Verwendung zusätzlicher oberflächenaktiver Substanzen wie Schutzkolloide oder Emulgatoren in Wasser dispergieren lassen.

Zur Herstellung derartiger selbstdispergierender Polyurethane enthält ein Teil der Monomere ($a_2$), ($b_1$) und/oder ($b_2$) hydrophile Gruppen oder Gruppen, die sich in hydrophile Gruppen überführen lassen (im folgenden kurz: "potentiell hydrophile Gruppen") und die mit Isocyanaten wesentlich langsamer reagieren als die funktionellen Gruppen der Monomere, die zum Aufbau der Polymerhauptkette dienen. Alkoholische Hydroxylgruppen, primäre und sekundäre Aminogruppen zählen deshalb nicht zu den (potentiell) hydrophilen Gruppen. Der Anteil der Monomeren mit (potentiell) hydrophilen Gruppen an der Gesamtmenge der Monomere (A) und (B) wird im allgemeinen so bemessen, daß die Molmenge der (potentiell) hydrophilen Gruppen, bezogen auf die Gewichtsmenge aller Monomere (A) und (B), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (A) und (B).

Bevorzugte Monomere mit nichtionischen hydrophilen Gruppen sind das Polyethylenglykol und Diisocyanate, die einen endständig veretherten Polyethylenglykolrest tragen. Derartige Diisocyanate sowie Verfahren zu deren Herstellung sind in den US-A 3 905 929 und 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere ($a_2$) ($b_1$) und ($b_2$) sind z.B. in Ullmanns Encyklopädie der technischen Chemie, 4. Auflage, Band 19, S. 311-313 und beispielsweise in der DE-A 1 495 745 ausführlich beschrieben.

Hierzu zählen beispielsweise folgende (potentiell) kationische Monomere:

Monomere ($a_2$) mit zu Quaternisierungsreaktionen befähigte Halogenatome sind z.B. Chlorhexylisocyanat und Bis(chlormethyl)-diphenylmethandiisocyanat.

Entsprechende Monomere (B) sind z.B. vor allem die Chlor oder Bromderivate von aliphatischen $C_2$- bis $C_6$-Mono- oder Diolen. Die genannten halogenhaltigen Verbindungen können mit tert. Aminen, Sulfiden oder Phosphinen quaterniert bzw. terniert werden. Dabei entstehen quaternäre Ammonium- und Phosphonium- bzw. ternäre Sulfoniumsalze. Derartige Quaternisierungsmittel sind beispielsweise Trialkylamine, Dialkylsulfide, Trialkylphosphine, wobei die Alkylreste unabhängig voneinander aus 2 bis 6 Kohlenstoffatomen bestehen.

Monomere mit tertiären Aminogruppen sind von besonderer praktischer Bedeutung, beispielsweise: Tris-(hydroryalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren oder durch Umsetzung mit geeigneten Quaternisierungsmitteln wie $C_1$- bis $C_6$-Alkylhalogeniden, z.B. Bromiden oder Chloriden in die Ammoniumsalze überführt.

Als Monomere mit (potentiell) anionischen Gruppen werden üblicherweise folgende Verbindungen eingesetzt:

Von Bedeutung sind vor allem Monomere ($b_1$) und ($b_2$) mit Carboxylatgruppen. Es kommen z.B. aliphatische, cycloaliphatische, araliphatische oder aromatische Mono- und Dihydroxycarbonsäuren in Betracht. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

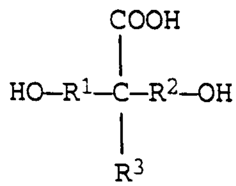

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Insbesondere sind Dihydroxylverbindungen mit einem Molekulargewicht über 500 bis 10000 g/mol mit mindestens 2 Carbonsäure- oder Carboxylatgruppen aus der DE-A 3 911 827 bekannt. Sie sind durch Umsetzung von Dihydroxylverbindungen mit Tetracarbonsäuredianhydriden wie Pyromellitsäuredianhydrid oder Cylopentantetracarbonsäuredianhydrid im Molverhältnis 2 : 1 bis 1,05 : 1 in einer Polyadditionsreaktion erhältlich. Als Dihydroxylverbindungen sind insbesondere die aufgeführten Monomere ($b_1$) geeignet.

Als Monomere ($b_2$) mit gegenüber Isocyanaten reaktiven Aminogruppen kommen Aminocarbonsäuren wie Lysin, $\beta$-Alanin, die in der DE-A 2 034 479 genannten Addukte von aliphatischen diprimären Diaminen an $\alpha,\beta$-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatomen bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen.

Auf dem Gebiet der Polyurethanchemie ist allgemein bekannt, wie das Molekulargewicht der Polyurethane durch Wahl der Anteile der miteinander reaktiven Monomere (A) und (B) sowie dem arithmetischen Mittel der Zahl der reaktiven funktionellen Gruppen pro Molekül eingestellt werden kann.

Normalerweise werden die Monomere (A) und (B) sowie ihre jeweiligen Molmengen so gewählt, daß das Verhältnis C : D mit

C) der Molmenge an Isocyanatgruppen und

D) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis C : D möglichst nahe an 1 : 1.

Monomere (A) und (B) mit nur einer reaktiven Gruppe oder mit mehr als 2 reaktiven Gruppen werden im allgemeinen in Mengen bis zu 15 mol-%, bevorzugt bis zu 8 mol-%, bezogen auf die Gesamtzahl der Monomeren (A) und (B) eingesetzt.

Die Polyurethane sind bevorzugt aufgebaut aus 0 bis 50 mol-%, besonders bevorzugt 10 bis 40 mol-% eines Polyamins mit mindestens 2 gegenüber Isocyanaten reaktiven Aminogruppen des Monomeren (B).

Es sind verschiedene Verfahren zur Herstellung der Polyurethane bekannt (vgl. Ullmanns Encyklopädie der technischen Chemie, 4. Auflage, Band 19, S. 310 bis 340).

Man kann die Polyurethane durch Polymerisation der Monomere (A) und (B) in Substanz erhalten, jedoch wird die Lösungsmittelpolymerisation wegen der geringeren Viskosität der entstehenden Reaktionsmischungen häufig vorgezogen.

Als Lösungsmittel eignen sich alle Flüssigkeiten, die sich gegenüber den Reaktionspartnern inert verhalten, also beispielsweise Ether wie Diethylether und Tetrahydrofuran, Ester wie Butylacetat und Ethylacetat, Ketone wie Aceton, Butanon und Methylamylketon, Alkylaromaten, z.B. Toluol und Xylole, Amide wie Dimethylformamid, Dimethylacetamid und N-Methylpyrrolidon.

Die Konzentration der Monomeren in der Reaktionsmischung beträgt üblicherweise 30 bis 100, bevorzugt 50 bis 100 Gew.-%. Die Umsetzung der Monomere (A) und (B) erfolgt im allgemeinen bei Reaktionstemperaturen von 20 bis 180 °C, bevorzugt 50 bis 150 °C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von

Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist. Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Als Mehrschneckenextruder eignen sich hierbei die in der Kunststoffverarbeitung an sich bekannten mehrwelligen, insbesondere zweiwelligen Schneckenmaschinen, vorzugsweise 2- oder 3-gängige, zweiwellige, selbstreinigende Knetscheiben-Schneckenpressen. Die Extruder besitzen mindestens eine Entgasungsöffnung und sind zur optimalen Verfahrensführung im allgemeinen zonenweise temperierbar. Die Schnekken sind vorzugsweise selbstreinigend und gleichsinnig drehend und in ihrer Gestaltung den jeweiligen Arbeitsbedingungen in den einzelnen Abschnitten des Extruders angepaßt. Die Wahl der jeweils geeigneten Schnecken bzw. Schneckenelemente für eine optimale Verfahrensführung ist dem Fachmann geläufig (vgl. "Schneckenmaschinen in der Verfahrenstechnik", H. Hermann, Springer Verlag, Berlin, Heidelberg, New York 1972).

Die Polyurethane sind in Form ihrer Lösungen oder in granulierter Form handelsfähig.

Unter Zuhilfenahme von Emulgatoren lassen sich Polyurethane mit starken Scherkräften in eine wässerige Dispersion überführen. Bevorzugt werden in der Praxis jedoch wässerige Dispersionen von selbstdispergierbaren Polyurethanen bevorzugt, die aus Monomeren aufgebaut sind, die (potentiell) hydrophile Gruppen tragen.

Meistens werden die Dispersionen nach einem der folgenden Verfahren hergestellt:
Nach dem "Acetonverfahren" wird in einem mit Wasser mischbaren und bei Normaldruck unter 100 °C siedenden Lösungsmittel aus den Monomeren (A) und (B) unter Verwendung solcher Monomere, die hydrophile Gruppen tragen, ein ionisches Polyurethan hergestellt. Es wird soviel Wasser zugegeben, bis sich eine Dispersion bildet, in der Wasser die kohärente Phase darstellt. Anschließend wird das Lösungsmittel abdestilliert.

Das "Präpolymer-Mischverfahren" unterscheidet sich vom Acetonverfahren darin, daß nicht ein ausreagiertes hydrophiles Polyurethan, sondern zunächst ein Präpolymer hergestellt wird, das Isocyanat-Gruppen trägt. Die Monomeren (A) und (B) werden hierbei so gewählt, daß das definitionsgemäße Verhältnis C : D größer 1,0 bis 3, bevorzugt 1,05 bis 1,5 beträgt. Das Präpolymer wird zuerst in Wasser dispergiert und anschließend durch Reaktion der Isocyanat-Gruppen mit Aminen, die mehr als 2 gegenüber Isocyanaten reaktive Aminogruppen tragen vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Hydrophobe Hilfsmittel, die unter Umständen nur schwierig homogen in der fertigen Dispersion zu verteilen sind, können auch nach der in der US-A 4 306 998 beschriebenen Methode dem Polyurethan oder dem Präpolymeren bereits vor der Dispergierung zugesetzt werden.

Der Gehalt des Polyurethans in den Dispersionen kann insbesondere zwischen 5 und 70 Gewichtsprozent, bevorzugt zwischen 20 bis 50 Gew.-%, bezogen auf die Dispersionen, liegen.

Die erfindungsgemäß zu verwendenden Polyurethan-Dispersionen oder Lösungen können für sich oder auch im Gemisch mit anderen, gleichsinnig geladenen Dispersionen bzw. Lösungen von Homo- oder Copolymeren von z.B. Acryl- oder Methacrylsäureestern, Styrol oder Butadien verwendet werden. Sie können durch Spritzen, Gießen oder Rakeln aufgetragen werden.

Zunehmendes Interesse finden außerdem Pulverlackbindemittel, die hochschmelzende Polyurethane und verkappte Isocyanate enthalten, die mit den Polyurethanen beim Einbrennen reagieren und es ausgehärten.

Die Herstellung der Pulver des mittleren Teilchendurchmessers von 10 bis 100$\mu$m kann beispielsweise erfolgen, indem man das Polyurethan-Granulat bei Temperaturen von -50 bis -100 °C zermahlt oder indem man Lösungen sprühtrocknet.

Den Dispersionen, Pulvern bzw. Lösungen können Hilfsmittel, z.B. Verdicker, Thixotropiermittel, Oxidations- und UV- Stabilisatoren, Trennmittel, Füllstoffe oder Pigmente zugesetzt werden. In der Praxis erfolgt die Verfilmung mittels dem Fachmann bekannter üblicher Verfahren, wie sie z.B. aus der Lack- oder Klebstoffverarbeitung bekannt sind, in Abhängigkeit vom Anwendungsgebiet. In den meisten Fällen werden die Lösungen und Dispersionen bei 20 bis 110 °C und die Pulver bei 90 bis 130 °C verfilmt. Die Dispersionen, Lösungen oder Pulver dienen als Beschichtungsmittel für beliebige Untergründe wie Textilien, Leder, Metall, Holz, Holzwerkstoffe oder Kunststoffe, zur Verklebung der genannten Werkstoffe oder zur

Herstellung von Folien.

Die aus den erfindungsgemäßen Polyurethanen herstellbaren Beschichtungsmaterialien und Folien zeichnen sich durch ein für die allermeisten anwendungstechnischen Eigenschaften vollauf befriedigendes Eigenschaftsniveau aus, was die mechanischen Eigenschaften betrifft und insbesondere eine hohe Transparenz aus. Die erfindungsgemäßen Polyurethane sind in Lösung vergleichsweise niederviskos, was die Einsparung von Lösungsmittel z.B. bei der Herstellung von Polyurethandsipersionen oder bei der Verarbeitung von Beschschichtungsmitteln auf Lösungsmittelbasis ermöglicht.

Zusätzliche Vorteile ergeben sich im Fall von wässerigen Dispersionen der Polyurethane, die hydrophile Gruppen tragen. Im allgemeinen ist man bestrebt, die Menge der hydrophilen Gruppen zu minimieren, damit die Wasserfestigkeit der Beschichtungen möglichst hoch ist. Andererseits müssen jedoch ausreichende Mengen an hydrophilen Gruppen im Polyurethan eingebaut sein, damit die Polyurethane leicht dispergierbar und ausreichend lange lagerbar sind. Es hat sich gezeigt, daß dieser Zielkonflikt bei den erfindungsgemäßen Polyurethanen besser als bei vergleichbaren Polyurethanen gelöst werden kann, weil die erfindungsgemäßen mit einem geringeren Anteil an hydrophilen Gruppen herstellbar sind als die vorbekannten, ohne daß ihre Dipergierbarkeit beeinträchtigt wäre.

Beispiel

Ein handelsübliches Bis(4-isocyanatocyclohexyl)methan mit einem chromatographisch bestimmten Gehalt an
26,0 Gew.-% cis,cis-Isomer
44,6 Gew.-% cis,trans-Isomer
21,1 Gew.-% trans,trans-Isomer
wurde 24 h bei 0 °C gelagert, wobei sich ein kristalliner Bodensatz bildete. Die überstehende Flüssigkeit wurde dekantiert und für die Herstellung des Polyurethans eingesetzt. Ihr Gehalt an den Isomeren betrug:
28,1 Gew.-% cis,cis-Isomer
47,1 Gew.-% cis,trans-Isomer
16,1 Gew.-% trans,trans-Isomer.

In einem zylinderförmigen Reaktor mit einem Durchmesser von 25 cm, der mit einem Ankerrührwerk ausgestattet war, an das eine Vorrichtung zur Messung des Drehmomentes angeschlossen war, wurde eine Mischung aus 400 g (0,2 mol) eines Polyesterdiols mit einer OH-Zahl von 56 (aufgebaut aus Adipinsäure, Neopentylglykol und Hexan-1,6-diol), 27 g (0,3 mol) Butan-1,4-diol, 0,2 g Dibutylzinndilaurat und 100 g Aceton vorgelegt. Zu der Mischung wurde bei 161,2 g (0,61 mol) das am trans,trans-Isomeren abgereicherte Bis(4-isocyanatocyclohexyl)methan gegeben und 360 Minuten bei 70 °C gerührt. Die entstandene Präpolymer-Lösung wurde mit 600 g Aceton verdünnt und auf 50 °C gekühlt. Sie wies einen NCO-Gehalt von 0,69 Gew.-% auf. Anschließend wurden zuerst 46,2 g (0,11 mol) einer 40 gew.-%igen wässerigen Lösung des Adduktes von Ethylendiamin an Natriumacrylat und nach weiteren 10 Minuten 1200 g Wasser innerhalb von 60 Minuten unter Rühren zugegeben. Aus der entstandenen Dispersion wurde das Aceton im Vakuum abdestilliert.

Vergleichsbeispiel

Das Beispiel wurde mit dem handelsüblichen Bis(4-isocyanatocyclohexyl)methan nachgearbeitet
Die Ergebnisse der Prüfung sind in der Tabelle zusammengestellt.

Die Viskosität der Präpolymer-Lösung wurde indirekt durch Messung des Drehmomentes ermittelt, das benötigt wird, um den Rührer mit 100 Umdrehungen pro Minute zu betreiben. Das angegebene Drehmoment bezieht sich auf eine Präpolymer-Lösung, die vor dem Verdünnen mit dem Aceton eine Temperatur von 70 °C und einen NCO-Gehalt von 1,34 Gew.-% aufwies.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = Intensität_{Disp.} \times 100 / Intensität_{Wasser}$$

Die Transparenz des Films wurde visuell ermittelt. Zur Herstellung des Films wurde die Dispersion mit einer Schichtdicke von 1 mm auf eine Glasplatte aufgetragen und getrocknet.

Die Reißfestigkeit und die Reißdehnung wurden in Zugversuchen auf übliche Weise an getrocknenten Filmen ermittelt und sind in $N/mm^2$ bzw. in Prozent angegeben. Die Standardabweichung der Messung

steht jeweils in Klammern hinter dem jeweiligen Wert.

Zur Prüfung der Lagerstabilität wurden die Dispersionen nach dreiwöchiger Lagerung bei Raumtemperatur daraufhin untersucht, ob sich ein Bodensatz gebildet hatte.

| | Beispiel | Vergl.-Beispiel |
|---|---|---|
| Drehmoment [Ncm] | 41 | 47 |
| LD-Wert | 72 | 49 |
| Transparenz des Films | klar | opak |
| Reißfestigkeit [N/mm$^2$] | 27,2 (1,4) | 27,8 (1,1) |
| Reißdehnung [%] | 595 (16) | 582 (20) |
| Lagerstabilität | nicht abgesetzt | abgesetzt |

## Patentansprüche

**1.** Als Beschichtungsmittel oder Komponenten hierfür geeignete Polyurethane, aufgebaut im wesentlichen aus

A)

$a_1$) 40 bis 100 mol-% Bis(4-isocyanatocyclohexyl)methan, wobei der trans/trans-Anteil von ($a_1$) bis zu 18 mol-%, bezogen auf die Menge von ($a_1$), beträgt und

$a_2$) 0 bis 60 mol-% weiterer mehrwertiger aliphatischer, cycloaliphatischer, araliphatischer oder aromatischer Isocyanate mit 4 bis 30 C-Atomen

und

B)

$b_1$) 20 bis 100 mol-% eines nicht-aromatischen Diols und

$b_2$) 0 bis 80 mol-% weiterer mehrwertiger Verbindungen mit reaktiven Gruppen, die mit den Isocyanatgruppen von A) reagieren können, wobei die reaktiven Gruppen Hydroxylgruppen oder primäre oder sekundäre Aminogruppen sind.

**2.** Polyurethane nach Anspruch 1, die zum Teil aus solchen Monomeren ($a_2$), ($b_1$) und/oder ($b_2$) aufgebaut sind, welche zur Verbesserung der Wasserdispergierbarkeit der Polyurethane hydrophile Gruppen tragen, die nicht oder nur schwer mit Isocyanaten reagieren.

**3.** Polyurethane nach Anspruch 1 oder 2, wobei das Verhältnis des cis/cis-Isomeren zum cis/trans Isomeren des Bis(4-isocyanatocyclohexyl)methans 0,2 : 1 bis 3 : 1 beträgt.

**4.** Polyurethane nach den Ansprüchen 1 bis 3, aufgebaut aus

$b_{1.1}$) 15 bis 85 mol-%, bezogen auf die Gesamtmenge der Monomeren ($b_1$), die ein Molekulargewicht von 500 bis 5000 g/mol haben und

$b_{1.2}$) 15 bis 85 mol-%, bezogen auf die Gesamtmenge der Monomeren ($b_1$), die ein Molekulargewicht von 60 bis 500 g/mol haben.

**5.** Polyurethane nach den Ansprüchen 1 bis 4, aufgebaut aus 0 bis 50 mol-% eines Polyamins mit mindestens 2 gegenüber Isocyanaten reaktiven Aminogruppen als Monomeren (B).

**6.** Polyurethane nach den Ansprüchen 1 bis 5, in denen das Verhältnis aller Isocyanatgruppen der Monomeren (A) zu allen mit Isocyanatgruppen reaktionsfähigen funktionellen Gruppen der Monomeren (B) 0,5 : 1 bis 2 : 1 beträgt.

**7.** Wässerige Dispersionen oder nichtwässerige Lösungen, enthaltend ein Polyurethan gemäß den Ansprüchen 1 bis 6.

**8.** Verwendung der Dispersionen und nichtwässerigen Lösungen gemäß Anspruch 7 als Beschichtungsmittel oder Klebstoff.

**9.** Mit Überzügen versehene oder verklebte Gegenstände, erhältlich unter Verwendung der wässerigen Dispersionen bzw. nichtwässerigen Lösungen gemäß Anspruch 8 als Beschichtungsmittel bzw. Klebstoffe.

Europäisches Patentamt

# EUROPÄISCHER RECHERCHENBERICHT

Nummer der Anmeldung
EP 95 10 5704

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-1 220 715 (ALLIED CHEMICAL CORP.)<br>* Ansprüche 1,7-13 *<br>* Seite 2, Zeile 34 - Zeile 47 *<br>* Seite 2, Zeile 86 - Seite 3, Zeile 58 *<br>--- | 1-9 | C08G18/75<br>C09D175/04<br>C09J175/04 |
| X | GB-A-1 365 854 (MONSANTO)<br>* Ansprüche 1,8,11 *<br>--- | 1,3,4 | |
| X | DE-A-16 18 795 (DU PONT)<br>* Ansprüche 1,3 *<br>* Seite 5, Absatz 2 -Absatz 4 *<br>* Beispiel 3 *<br>--- | 1 | |
| X | DE-A-17 93 785 (DU PONT)<br>* Ansprüche 1,2 *<br>* Seite 2, Absatz 2 -Absatz 3 *<br>--- | 1 | |
| D,A | DE-A-42 31 034 (BASF)<br>* Ansprüche 1-5 *<br>* Seite 4, Zeile 19 - Seite 5, Zeile 7 *<br>--- | 1 | **RECHERCHIERTE SACHGEBIETE (Int.Cl.6)** |
| D,A | EP-A-0 507 173 (MILES INC.)<br>* Ansprüche 1-4,8,14,15 *<br>----- | 1 | C08G<br>C07C |

Der vorliegende Recherchenbericht wurde für alle Patentansprüche erstellt

| Recherchenort | Abschlußdatum der Recherche | Prüfer |
|---|---|---|
| DEN HAAG | 7. August 1995 | Van Puymbroeck, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)